# EUROPEAN PATENT APPLICATION

(11) **EP 4 850 793 A1**
(43) Date of publication of application: **09.12.2026**
(21) Application number: 25180545.3
(22) Date of filing: 03.06.2025
(51) Int. Cl.: B01D 53/94, B01J 23/63, B01J 35/00, B01J 35/57, F01N 3/10

(54) **SILICA ADDITIVE IN THREE-WAY CATALYST ARTICLE**

(71) Applicant: Johnson Matthey Public Limited Company, London EC2V 7AD (GB)
(72) Inventor: TAMOTO, Masahiro, Sakura Shi, 329-1412 (JP); NAGAOKA, Shuhei, Sakura Shi, 329-1412 (JP); ZHANG, Xiaorui, Sakura Shi, 329-1412 (JP)
(74) Representative: Johnson Matthey Public Limited Company

(57) **Abstract**

The present invention relates to a catalyst article for the treatment of exhaust gas from an internal combustion engine. The catalyst article comprises a substrate; and a first washcoat region disposed on the substrate. The first washcoat region comprises: a first platinum group metal (PGM) component, the first PGM component comprising Pd and/or Pt; a first support material comprising a first inorganic oxide and/or a first oxygen storage capacity (OSC) material; and silica, wherein at least some of the silica is supported on the first support material and wherein the first washcoat region comprises from 0.1 to 10 wt.% of the silica, based on the total weight of the silica and the first support material.

## Description

### FIELD OF THE INVENTION

The invention relates to a catalyst article for the treatment of exhaust gas from an internal combustion engine, a method of treating an exhaust gas from an internal combustion engine, an exhaust gas treatment system, and a fuel combustion and exhaust gas treatment system.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three-way catalyst). TWCs perform three main functions: (1) oxidation of CO; (2) oxidation of unburnt HCs; and (3) reduction of NOₓ.

Despite advances in TWC technology, there remains a need for improved catalytic converters for certain engine platforms that simultaneously improve the performance in cold start stage, give better light off performance, as well as at hot transient stage, and give better OSC performance, with a wide range of Pd and/or Pt applications.

### SUMMARY OF THE INVENTION

One aspect of the present disclosure is directed to a catalyst article for the treatment of exhaust gas from an internal combustion engine, the catalyst article comprising:
a substrate; and
a first washcoat region disposed on the substrate;
wherein the first washcoat region comprises:
   a first platinum group metal (PGM) component, the first PGM component comprising Pd and/or Pt;
a first support material comprising a first inorganic oxide and/or a first oxygen storage capacity (OSC) material; and
silica, wherein at least some of the silica is supported on the first support material and wherein the first washcoat region comprises from 0.1 to 10 wt.% of the silica, based on the total weight of the silica and the first support material.

Another aspect of the present disclosure is directed to a catalyst article for the treatment of exhaust gas from an internal combustion engine, the catalyst article comprising:
a substrate; and
a first washcoat region disposed on the substrate;
wherein the first washcoat region comprises:
   a first platinum group metal (PGM) component, the first PGM component comprising Pd and/or Pt;
   a first support material comprising a first oxygen storage capacity (OSC) material and, optionally, a first inorganic oxide; and
   silica, wherein at least some of the silica is supported on the first OSC material and wherein the first washcoat region comprises from 0.1 to 10 wt.% of the silica, based on the total weight of the silica and the first OSC material.

Another aspect of the present disclosure is directed to a method of treating an exhaust gas from an internal combustion engine, preferably from a gasoline engine, the method comprising contacting the exhaust gas with the catalyst article described herein.

Another aspect of the present disclosure is directed to an exhaust gas treatment system for treating a flow of exhaust gas from an internal combustion engine, preferably from a gasoline engine, the exhaust gas treatment system comprising the catalyst article described herein.

Another aspect of the present disclosure is directed to a fuel combustion and exhaust gas treatment system comprising:
an internal combustion engine, preferably configured to run on gasoline;
a source of gasoline for supplying the internal combustion engine; and
an exhaust gas treatment system for the internal combustion engine, wherein the exhaust gas treatment system is as described herein.

### DETAILED DESCRIPTION OF THE INVENTION

The present invention seeks to tackle at least some of the problems associated with the prior art or at least to provide a commercially acceptable alternative solution thereto.

In a first aspect, the present invention provides a catalyst article for the treatment of exhaust gas from an internal combustion engine, the catalyst article comprising:
a substrate; and
a first washcoat region disposed on the substrate;
wherein the first washcoat region comprises:
   a first platinum group metal (PGM) component, the first PGM component comprising Pd and/or Pt;
   a first support material comprising a first inorganic oxide and/or a first oxygen storage capacity (OSC) material; and
   silica, wherein at least some of the silica is supported on the first support material and wherein the first washcoat region comprises from 0.1 to 10 wt.% of the silica, based on the total weight of the silica and the first support material.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, when used in an emission treatment system, in particular an emission treatment system for the treatment of exhaust gas from a gasoline internal combustion engine, for example, the catalyst article of the invention demonstrates improved catalytic activity. In particular, Pd (and Pt) is a key catalytic metal for the oxidation of HCs. The inclusion of additional silica in the recited amounts has been found to not only improve the HC oxidation performance of the catalyst article, but also suppress sintering of the Pd (and Pt) and support material, in particular the OSC material, which can lead to deactivation of the catalyst on ageing. The overall TWC catalytic performance (such as the light-off temperature for HC, CO and NOₓ conversion) may also be improved. Sufficient silica must be present for these advantages to be observed to a practical extent. Moreover, the presence of too much silica has been observed to reduce the HC oxidation light-off temperature of the catalyst article. The catalyst article described herein therefore provides an improved catalyst article, in particular for TWC applications, with a desirable balance of properties, both in terms of catalytic performance and resistance to deactivation upon ageing.

It should be understood that the silica is not present for the sole purpose of acting as a binder, but as a further component to promote the catalytic activity of the catalyst article.

The catalyst article comprises a substrate. The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art. The substrate typically comprises an inlet end and an outlet end with an axial length L.

The term "region" as used herein may encompass an area on a substrate, typically obtained by drying and/or calcining a washcoat. The term "washcoat" is well known in the art and refers to an adherent coating that is applied to a substrate usually during production of a catalyst. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length, i.e. along the axial length of the substrate. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that the "region" has a substantially uniform composition (i.e. there is no substantial difference in the composition of the washcoat when comparing one part of the region occupied by the coating with another part of that region, on average). Substantially uniform composition in this context refers to a material (*e.g*., region) where the difference in composition when comparing one part of the region with another part of the region is 5% or less, usually 2.5% or less, and most commonly 1% or less, for each component of the region on a wt.% basis relative to the total weight of the part of the region. In other words, preferably, in an arbitrarily selected region of the region, the content of each component of the region, in wt.% relative to the total weight of the arbitrarily selected region of the washcoat region, is 5% or less, usually 2.5% or less, and most commonly 1% or less, even more preferably 0.1% or less, as compared with the total wt.% of that component of the region in the region.

The first washcoat region is disposed on the substrate. The term "disposed on" as used herein in this regard may encompass both having the first washcoat region directly disposed on the substrate, i.e. with no intervening material, and/or indirectly disposed on the substrate, i.e. with intervening material. If the substrate is porous, then the term "disposed on" may also encompass having the first washcoat region disposed therein, for example within the pores of the substrate, i.e. wherein the first washcoat region material is disposed thereon and/or therein.

The first washcoat region can extend for 100 % of the axial length L. In some embodiments, the first washcoat region can extend from the inlet end or the outlet end of the substrate for less 100 % of the axial length L. In some embodiments, the first washcoat region can extend for 20 to 99 %, or 30 to 90 %, or 40 to 80 %, or 30 to 70 %, or 40 to 60 % or 45 to 55 % of the axial length L.

The first washcoat region comprises a first PGM component. The first (and any other) PGM component described herein is typically in the form of metal particles, more typically nanoparticles.

The term "support material", in general, as used herein may encompass any known support material that may be used to support PGMs in the field of the present invention, typically in powder form.

The relative terms "first", "second", etc. as used herein are simply labels used in order to distinguish the layers and are not intended to indicate the relative arrangement of the washcoat regions, unless stated otherwise.

The term "supported on" in the context of, for example, "at least some of the silica is supported on the first support material" as used herein may encompass that the silica is directly in contact, and physically and/or chemically bound to the surface of the support material. The term "surface of the support material" may encompass the surface of the pores within a porous support material, for example.

Preferably, the first PGM component comprises, more preferably consists of, Pd. The interaction of Pd, in particular, and the silica has been seen to be particularly effective at providing the advantages described herein, as demonstrated in the Examples.

Preferably, the first inorganic oxide comprises an alumina. The alumina preferably comprises one or more of alpha alumina, gamma alumina and theta alumina, preferably wherein the alumina comprises gamma alumina.

Preferably, if present, the alumina is doped with a dopant, preferably wherein the dopant comprises lanthanum. In other words, preferably the alumina comprises or is a lanthanum-doped alumina. However, the alumina may be doped with one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium, praseodymium and yttrium. Preferably, the dopant is present in the alumina in an amount of from 0.001 wt.% to 20 wt.%, preferably from 0.5 wt.% to 10 wt.%, based on the total weight of the alumina and the dopant. Alternatively, the alumina may be undoped, i.e. wherein the alumina is (substantially) free of dopant.

Preferably, the first OSC material comprises a ceria-zirconia mixed oxide. The term "ceria-zirconia" as used herein may encompass a ceria-zirconia mixed oxide, i.e. a ceria-zirconia-based mixed oxide. As described herein, the ceria-zirconia mixed oxide may comprise additional dopants, but the ceria-zirconia mixed oxide may also consist of ceria and zirconia.

Preferably, the first OSC material comprises a ceria-zirconia mixed oxide and the first OSC material comprises a doped ceria-zirconia mixed oxide, more preferably wherein the ceria-zirconia mixed oxide is doped with one or more of Nd, La, Y and Pr. Preferably, the dopant is present in the ceria-zirconia mixed oxide in an amount of from 0.001 wt.% to 20 wt.%, preferably from 0.5 wt.% to 10 wt.%, based on the total weight of the ceria-zirconia mixed oxide and the dopant.

Preferably, the first support material comprises the first inorganic oxide and the first OSC material, and more preferably the first support material comprises the first inorganic oxide and the first OSC material wherein the first inorganic oxide comprises an alumina and the first OSC material comprises a ceria-zirconia mixed oxide.

Preferably, the first support material comprises the first inorganic oxide and the first OSC material; and at least some of the silica in the first washcoat region is supported on the first OSC material, preferably at least 75 wt.%, based on the total weight of the silica in the first washcoat region, more preferably at least 90 wt.%, even more preferably at least 95 wt.%, still more preferably at least 99 wt.%, still even more preferably substantially all. It will be appreciated that even if all of the silica is supported on the first OSC material during preparation of the catalyst article and/or in the fresh catalyst article, during manufacture and/or during use and ageing of the catalyst article, at least a small proportion of the silica may become supported on other support materials and/or be displaced from being supported on the first OSC material. It has surprisingly been found that if the silica is preferentially loaded onto the first OSC material when the first washcoat region comprises both the first inorganic oxide and the first OSC material, then the TWC performance of the catalyst article may be improved. Moreover, the thermal stability of the OSC material, and therefore the catalyst article, may be improved, prolonging the catalyst article's activity after ageing. In addition, surprisingly, the oxygen storage capacity performance of the OSC material in the catalyst article may also be improved. This is in comparison to having no silica present, the silica supported without preference on both of the first inorganic oxide and the first OSC material, or having the silica preferentially supported on the first inorganic oxide.

Similarly, preferably, the first support material comprises the first inorganic oxide and the first OSC material; and no more than 25 wt.% of the silica in the first washcoat region is supported on the first inorganic oxide, based on the total weight of the silica in the first washcoat region, preferably no more than 10 wt.%, more preferably no more than 5 wt.%, even more preferably no more than 1 wt.%, still even more preferably substantially none.

However, in some alternative embodiments, the silica may be supported on the first inorganic oxide and on the first OSC material. In certain embodiments, the first washcoat region comprises from 0.5 to 8 wt.%, 0.5 to 6 wt.%, 1 to 5 wt.%, or 2 to 5 wt.% of the silica, based on the total weight of the silica and the first support material. In some embodiments, the first washcoat region comprises from 1 to 4 wt.% of the silica, such as from 2 to 3 wt.% of the silica, based on the total weight of the silica and the first support material.

Moreover, in some alternative embodiments, the first support material comprises the first inorganic oxide and the first OSC material; and at least some of the silica in the first washcoat region is supported on the first inorganic oxide, preferably at least 75 wt.%, based on the total weight of the silica in the first washcoat region, more preferably at least 90 wt.%, even more preferably at least 95 wt.%, still more preferably at least 99 wt.%, still even more preferably substantially all. Similarly, in some alternative embodiments, the first support material comprises the first inorganic oxide and the first OSC material; and no more than 25 wt.% of the silica in the first washcoat region is supported on the first OSC material, based on the total weight of the silica in the first washcoat region, preferably no more than 10 wt.%, more preferably no more than 5 wt.%, even more preferably no more than 1 wt.%, still even more preferably substantially none.

Preferably, the first support material comprises the first OSC material and the first washcoat region comprises from 0.5 to 8 wt.%, 0.5 to 6 wt.%, 1 to 5 wt.%, or 2 to 5 wt.% of the silica, based on the total weight of the silica and the first OSC material, more preferably wherein the first OSC material comprises from 0.5 to 8 wt.%, 0.5 to 6 wt.%, 1 to 5 wt.%, or 2 to 5 wt.% of the silica supported thereon, based on the total weight of the silica and the first OSC material. In other words, preferably the first OSC material comprises the silica supported thereon in an amount of from 0.5 to 8 wt.%, 0.5 to 6 wt.%, 1 to 5 wt.%, or 2 to 5 wt.%, based on the total weight of the silica and the first OSC material. In some embodiments, the first washcoat region comprises from 1 to 4 wt.% of the silica, such as from 2 to 3 wt.% of the silica, based on the total weight of the silica and the first OSC material. Preferably, the first OSC material comprises from 1 to 4 wt.% of the silica supported thereon, such as from 2 to 3 wt.% of the silica supported thereon, based on the total weight of the silica and the first OSC material. In other words, preferably the first OSC material comprises the silica supported thereon in an amount of from 1 to 4 wt.%, such as from 2 to 3 wt.%, based on the total weight of the silica and the first OSC material.

Preferably, the first support material comprises the first inorganic oxide and the first OSC material; and the ratio by weight of the first inorganic oxide to the first OSC material is from 1:3 to 3:1, such as from 2:1 to 1:2 or from 3:2 to 2:3, or even about 1:1.

Preferably, the first PGM component is supported on the first inorganic oxide and/or the first OSC material. Preferably, at least 75 wt.% of the first PGM component is supported on the first inorganic oxide and/or the first OSC material, based on the total weight of the first PGM component, more preferably at least 90 wt.%, even more preferably at least 95 wt.%, still more preferably at least 99 wt.%, still even more preferably substantially all.

Preferably, the first PGM component is supported on the first OSC material at a loading of from 0.1 to 5 wt.%, based on the total weight of the first OSC material, in particular wherein the first PGM component comprises Pd, preferably from 0.5 to 4 wt.%, more preferably from 1 to 3 wt.%.

Preferably, the catalyst article comprises from 0.5 to 3 g/in³ of the first washcoat region, more preferably from 1.0 to 2.5 g/in³, based on the total volume of the substrate.

Preferably, the first washcoat region comprises from 0.5 to 3 g/in³ of the first support material, more preferably from 1.0 to 2.5 g/in³, based on the total volume of the substrate. Preferably, the first washcoat region comprises from 0.1 to 2 g/in³ of the first inorganic oxide, more preferably from 0.3 to 1.5 g/in³, based on the total volume of the substrate. Preferably, the first washcoat region comprises from 0.1 to 2 g/in³ of the first OSC material, more preferably from 0.3 to 1.5 g/in³, based on the total volume of the substrate.

Preferably, the first washcoat region comprises from 10 to 200 g/ft³ of the silica, more preferably from 30 to 180 g/ft³, even more preferably from 50 to 160 g/ft³, based on the total volume of the substrate. In conventional uses of silica as a binder, it may typically be present in amounts less than 30 g/ft³, such as less than 20 g/ft³, less than 10 g/ft³, or even less than 5 g/ft³.

Preferably, the first washcoat region comprises from 10 to 200 g/ft³ of the first PGM component, in particular wherein the first PGM component comprises or is Pd, more preferably from 30 to 180 g/ft³, even more preferably from 50 to 160 g/ft³, based on the total volume of the substrate. Preferably, the first washcoat region comprises from 10 to 200 g/ft³ Pd, more preferably from 30 to 180 g/ft³ Pd, even more preferably from 50 to 160 g/ft³ Pd, based on the total volume of the substrate.

In some preferred embodiments, the first washcoat region comprises from 10 to 200 g/ft³ Pt, more preferably from 30 to 180 g/ft³ Pt, even more preferably from 50 to 160 g/ft³ Pt, based on the total volume of the substrate.

Preferably, when a cross section of the first washcoat region of the catalyst article is subjected to area analysis by FE-EPMA under conditions of pixel (section) size of 0.34 µm × 0.34 µm and number of measured pixels (sections) of 256 × 256, a characteristic X-ray intensity (α: cps) of the silicon (Si) and a characteristic X-ray intensity (β: cps) of the PGM are measured for each pixel, and the Pearson correlation coefficient calculated using the resulting α and β in each pixel is designated as R_{Si/PGM}, then the value of R_{Si/PGM} is at least 0.50, preferably at least 0.60. Preferably, the PGM is Pd. Without wishing to be bound by theory, higher PGM:Si correlation is thought to contribute to the surprising technical advantages described herein that have been observed by the inventors.

Unless otherwise specified, the cross section of the first washcoat region of the catalyst article may be taken in a plane perpendicular to the axial direction of the substrate. Any arbitrary cross section may be taken, such as 1 inch from an axial end of the substrate, such as the inlet end of the substrate. The Pearson correlation coefficient (product moment correlation coefficient) is known to the skilled person and is calculated based on the results of area analysis by FE-EPMA. The correlation coefficient R_{Si/PGM} is determined by the formula: R_{Si/PGM} = (covariance)/(standard deviation of α×standard deviation of β), wherein the first variable (α) is a characteristic X-ray intensity of the silicon (Si) and the second variable (β) is a characteristics X-ray intensity of the PGM (preferably Pd) in area analysis by FE-EPMA. Such a calculation is known to the skilled person. In other words, preferably, the silicon and PGM are highly correlated in such a catalyst article. That is, the silicon may be present in a highly dispersed state with reference to the distribution of the PGM on the substrate. Thus, the ability of the silicon to interact with the PGM may be optimised.

Preferably, the catalyst article further comprises a second washcoat region disposed on the substrate, the second washcoat region comprising a second PGM component comprising Rh, preferably wherein the first washcoat region at least partially overlays the second washcoat region. Preferably, the second washcoat region is directly disposed on the substrate. Preferably, the first washcoat region is directly disposed on the second washcoat region, or the first washcoat region is directly disposed on the second washcoat region and the substrate (i.e. where the first and second washcoat regions extend from opposite ends of the substrate and the second washcoat region does not extend for the entire axial length of the substrate, for example).

The second washcoat region can extend for 100 % of the axial length L. In some embodiments, the second washcoat region can extend from the inlet end or the outlet end of the substrate for less 100 % of the axial length L. In some embodiments, the second washcoat region can extend for 20 to 99 %, or 30 to 90 %, or 40 to 80 %, or 30 to 70 %, or 40 to 60 % or 45 to 55 % of the axial length L.

Preferably, the catalyst article comprises from 0.5 to 3 g/in³ of the second washcoat region, more preferably from 1.0 to 2.5 g/in³, based on the total volume of the substrate.

Preferably, the second washcoat region comprises from 0.5 to 30 g/ft³ of the second PGM component, in particular wherein the second PGM component comprises or is Rh, more preferably from 5 to 25 g/ft³, even more preferably from 10 to 20 g/ft³, based on the total volume of the substrate. Preferably, the second washcoat region comprises from 0.5 to 30 g/ft³ Rh, more preferably from 5 to 25 g/ft³ Rh, even more preferably from 10 to 20 g/ft³ Rh, based on the total volume of the substrate.

Preferably, the second PGM component further comprises Pt and/or Pd. Preferably, if present, the second washcoat region comprises from 0.5 to 30 g/ft³ Pt, more preferably from 5 to 25 g/ft³ Pt, even more preferably from 10 to 20 g/ft³ Pt, based on the total volume of the substrate. Preferably, if present, the second washcoat region comprises from 0.5 to 30 g/ft³ Pd, more preferably from 5 to 25 g/ft³ Pd, even more preferably from 10 to 20 g/ft³ Pd, based on the total volume of the substrate.

Preferably, the second washcoat region comprises a second inorganic oxide and/or a second OSC material, preferably wherein at least some of the second PGM component is supported on the second inorganic oxide and/or the second OSC material.

Preferably, the second inorganic oxide comprises an alumina. The alumina preferably comprises one or more of alpha alumina, gamma alumina and theta alumina, preferably wherein the alumina comprises gamma alumina.

Preferably, if present, the alumina is doped with a dopant, preferably wherein the dopant comprises lanthanum. In other words, preferably the alumina comprises or is a lanthanum-doped alumina. However, the alumina may be doped with one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium, praseodymium and yttrium. Preferably, the dopant is present in the alumina in an amount of from 0.001 wt.% to 20 wt.%, preferably from 0.5 wt.% to 10 wt.%, based on the total weight of the alumina and the dopant. Alternatively, the alumina may be undoped, i.e. wherein the alumina is (substantially) free of dopant.

Preferably, the second OSC material comprises a ceria-zirconia mixed oxide. The term "ceria-zirconia" as used herein may encompass a ceria-zirconia mixed oxide, i.e. a ceria-zirconia-based mixed oxide. As described herein, the ceria-zirconia mixed oxide may comprise additional dopants, but the ceria-zirconia mixed oxide may also consist of ceria and zirconia.

Preferably, the second OSC material comprises a ceria-zirconia mixed oxide and the second OSC material comprises a doped ceria-zirconia mixed oxide, more preferably wherein the ceria-zirconia mixed oxide is doped with one or more of Nd, La, Y and Pr. Preferably, the dopant is present in the ceria-zirconia mixed oxide in an amount of from 0.001 wt.% to 20 wt.%, preferably from 0.5 wt.% to 10 wt.%, based on the total weight of the ceria-zirconia mixed oxide and the dopant.

Preferably, the second support material comprises the second inorganic oxide and the second OSC material, and more preferably the second support material comprises the second inorganic oxide and the second OSC material wherein the second inorganic oxide comprises an alumina and the second OSC material comprises a ceria-zirconia mixed oxide.

Preferably, the second support material comprises the second inorganic oxide and the second OSC material; and the ratio by weight of the second inorganic oxide to the second OSC material is from 1:3 to 3:1, such as from 2:1 to 1:2 or from 3:2 to 2:3, or even about 1:1.

Preferably, the second PGM component is supported on the second inorganic oxide and/or the second OSC material. Preferably, at least 75 wt.% of the second PGM component is supported on the second inorganic oxide and/or the second OSC material, based on the total weight of the second PGM component, more preferably at least 90 wt.%, even more preferably at least 95 wt.%, still more preferably at least 99 wt.%, still even more preferably substantially all.

Preferably, the second PGM component is supported on the second OSC material at a loading of from 0.1 to 5 wt.%, based on the total weight of the second OSC material, in particular wherein the second PGM component comprises Rh, preferably from 0.5 to 4 wt.%, more preferably from 1 to 3 wt.%.

Preferably, the second washcoat region comprises from 0.5 to 3 g/in³ of the second support material, more preferably from 1.0 to 2.5 g/in³, based on the total volume of the substrate. Preferably, the second washcoat region comprises from 0.1 to 2 g/in³ of the second inorganic oxide, more preferably from 0.3 to 1.5 g/in³, based on the total volume of the substrate. Preferably, the second washcoat region comprises from 0.1 to 2 g/in³ of the second OSC material, more preferably from 0.3 to 1.5 g/in³, based on the total volume of the substrate.

Preferably, the first washcoat region and/or the second washcoat region further comprises one or more of: an alkaline earth metal, preferably wherein the alkaline earth metal comprises one or both of barium and strontium; a rare earth metal, preferably wherein the rare earth metal comprises one or both of neodymium and praseodymium; and a transition metal, preferably wherein the transition metal comprises manganese.

Preferably, the first washcoat region and/or the second washcoat region further comprises a binder. Binders may include, for example, an oxide material with small particle size to bind the individual insoluble particles together in washcoat slurry. The use of binders in washcoats is well known in the art and suitable binders are known to the skilled person. The binder preferably comprises a further alumina species, such as alumina or an alumina sol. Preferably, the first washcoat region comprises from 0.01 to 0.2 g/in³, more preferably from 0.02 to 1.7 g/in³, even more preferably from 0.03 to 1.5 g/in³, still more preferably from 0.04 to 1.3 g/in³, still more preferably from 0.05 to 1.2 g/in³, still more preferably from 0.06 to 1.0 g/in³ of the binder, based on the total volume of the substrate.

Preferably, the substrate is a flow-through monolith.

Preferably, the catalyst article is for the treatment of exhaust gas from a gasoline engine. Preferably, the catalyst article is a three-way catalyst article.

In a further aspect, provided is a catalyst article for the treatment of exhaust gas from an internal combustion engine, the catalyst article comprising:
a substrate; and
a first washcoat region disposed on the substrate;
wherein the first washcoat region comprises:
   a first platinum group metal (PGM) component, the first PGM component comprising Pd and/or Pt;
   a first support material comprising a first oxygen storage capacity (OSC) material and, optionally, a first inorganic oxide; and
   silica, wherein at least some of the silica is supported on the first OSC material and wherein the first washcoat region comprises from 0.1 to 10 wt.% of the silica, based on the total weight of the silica and the first OSC material. In other words, preferably the first OSC material comprises from 0.1 to 10 wt.% of the silica supported thereon, based on the total weight of the silica and the first OSC material. Preferably, the first washcoat region comprises from 0.5 to 5 wt.% of the silica, based on the total weight of the silica and the first OSC material, preferably from 1 to 4 wt.%, more preferably from 2 to 3 wt.%.

The advantages and preferred features of the first aspect apply also to this aspect.

In a further aspect, provided is a method of treating an exhaust gas from an internal combustion engine, preferably from a gasoline engine, the method comprising contacting the exhaust gas with the catalyst article described herein.

The advantages and preferred features of the first aspect apply also to this aspect.

The method comprises contacting the exhaust gas with the catalyst article. Typically, the exhaust gas is contacted with the catalyst article such that it contacts the first washcoat region and, if present, the second washcoat region, i.e. by passing through the first washcoat region and/or second washcoat region and/or by passing over the first washcoat region and/or second washcoat region. When the substrate is a flow-through monolith or a filter, contacting the exhaust gas with the catalytic article typically comprises passing the exhaust gas through the flow-through monolith or the filter.

In a further aspect, provided is an exhaust gas treatment system for treating a flow of exhaust gas from an internal combustion engine, preferably from a gasoline engine, the exhaust gas treatment system comprising the catalyst article described herein.

The advantages and preferred features of the first aspect apply also to this aspect.

In a further aspect, provided is a fuel combustion and exhaust gas treatment system comprising:
an internal combustion engine, preferably configured to run on gasoline;
a source of gasoline for supplying the internal combustion engine; and
an exhaust gas treatment system for the internal combustion engine, wherein the exhaust gas treatment system is as described herein.

The advantages and preferred features of the first aspect apply also to this aspect.

### OTHER DEFINTIONS

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of" embraces the expression "consisting of".

The expression "substantially free of' as used herein with reference to a material, typically in the context of the content of a region, a layer or a zone, means that the material in a minor amount, such as ≤ 5 % by weight, preferably ≤ 2 % by weight, more preferably ≤ 1 % by weight. The expression "substantially free of' embraces the expression "does not comprise."

The expression "essentially free of' as used herein with reference to a material, typically in the context of the content of a region, a layer or a zone, means that the material in a trace amount, such as ≤ 1 % by weight, preferably ≤ 0.5 % by weight, more preferably ≤ 0.1 % by weight. The expression "essentially free of' embraces the expression "does not comprise."

The term "loading" as used herein refers to a measurement in units of g/ft³ on a metal weight basis, unless otherwise stated.

The invention will now be described in relation to the following non-limiting examples.

### EXAMPLES

### Materials

All materials are commercially available and were obtained from known suppliers, unless noted otherwise.

### General preparation of catalyst washcoat

Pd was added into slurries of each of commercially available La-stabilized γ-Al₂O₃ and commercially available OSC material, and then those slurries were mixed.

For the Si-added Pd washcoat, silica sol was added into the above alumina or OSC slurry prior to mixing them. The Pd was added in the form of a water-soluble Pd salt.

### EXAMPLE 1: Light-Off Performances in Synthetic Catalyst Activity Test for Si-added Pd-OSC material

### Comparative Catalyst A

Comparative Catalyst A was a single-layered TWC coated on a ceramic substrate (400 cells per square inch (cpsi), 4.0 mil wall thickness). The catalyst layer consisted of Pd supported on a washcoat of La-stabilized alumina and OSC material. The washcoat loading was about 2 g/in³ with a Pd loading of 51 g/ft³.

### Catalyst B

Catalyst B was a single-layered TWC coated on a ceramic substrate (400 cpsi, 4.0 mil wall thickness). The catalyst layer consisted of Pd supported on a washcoat of La-stabilized alumina and 2 wt.% silica added OSC material. The washcoat loading was about 2 g/in³ with a Pd loading of 51 g/ft³ and Si loading of 33 g/ft³.

Comparative Catalyst A, and Catalyst B were tested separately over a Synthetic Catalyst Activity Test (SCAT) device. The light-off performance was tested in a gas flow of 10 vol.% H₂O + 15 vol.% CO₂+ 1260 ppm C₃H₆ + 0.2 vol.% H₂ + 0.6 vol.% CO + 0.53 vol.% O₂ + 1000 ppm NO balanced with N₂ (the space velocity was 100000 h⁻¹), and temperature ramp was 25°C/min. The conversion of THC, CO and NOₓ were calculated by comparing the concentration of the feed gas and the gas at the outlets of the catalysts. The conversion is the concentration of the particular species after passing through the catalyst article as a percentage of the input concentration (i.e. the concentration of the species in the feed gas). A series of Comparative Catalysts A and Catalyst B were hydrothermally aged for 4 hours at 1000 °C under redox condition showed in **Table 1.**

**Table 1: Redox Ageing Conditions**

| Condition | CO(%) | C₃H₆(%) | H₂(%) | O₂(%) | H₂O(%) | N₂ | Duration |
|---|---|---|---|---|---|---|---|
| Stoich | 0 | 0 | 0 | 0 | 10 | Balance | 720sec. |
| Reducing | 0 | 0.176 | 0 | 0.50 | 10 | Balance | 60sec. |
| Oxidizing | 0 | 0 | 0 | 20 | 10 | Balance | 60sec. |

The HC, CO and NOₓ T₅₀ light-off temperatures of the aged Comparative Catalyst A, and Catalyst B are shown in **Table 2.** The data indicate that, surprisingly, Catalyst B of the present invention gave significantly improved light-off performance when compared with Comparative Catalyst A (Pd/Al₂O₃+OSC). The impact of the light-off performance improvement was about 5 °C, 5 °C and 2 °C lower T₅₀ (T₅₀ is the temperature when the conversion reaches 50%, as is known to the skilled person) for CO, HC and NOₓ, respectively, for Catalyst B of Pd/(Al₂O₃+Si/OSC) as compared to Comparative Catalyst A of Pd/(Al₂O₃+OSC).

**Table 2: SCAT Light-Off Test Results**

| | **T₅₀ (°C)** | | |
|---|---|---|---|
| | CO | HC | NOₓ |
| **Comparative Catalyst A** | 267 | 262 | 271 |
| **Catalyst B** | 262 | 257 | 269 |

### EXAMPLE 2: Light-Off Performances in Synthetic Catalyst Activity Test for silica located on Al₂O₃ or OSC.

### Comparative Catalyst C

Comparative Catalyst C was a single-layered TWC coated on a ceramic substrate (400 cpsi, 4.0 mil wall thickness). The catalyst layer consisted of Pd supported on a washcoat of La-stabilized alumina and OSC material. The washcoat loading was about 2 g/in³ with a Pd loading of 51 g/ft³.

### Catalyst D

Catalyst D was a single-layered TWC coated on a ceramic substrate (400 cpsi, 4.0 mil wall thickness). The catalyst layer consisted of Pd supported on a washcoat of 5 wt.% Si added La-stabilized alumina and OSC material. The washcoat loading was about 2 g/in³ with a Pd loading of 51 g/ft³ and Si loading of 82 g/ft³.

### Catalyst E

Catalyst E was a single-layered TWC coated on a ceramic substrate (400 cpsi, 4.0 mil wall thickness). The catalyst layer consisted of Pd supported on a washcoat of La-stabilized alumina and 5 wt.% Si added OSC material. The washcoat loading was about 2 g/in³ with a Pd loading of 51 g/ft³ and Si loading of 82 g/ft³.

Based on EPMA data, Pd and Si are co-located with a R_{Si}/_{Pd} value of 0.65.

Comparative Catalyst C, and Catalysts D and E were tested separately over a SCAT device, after the hydrothermal ageing for 4 hours at 1000 °C under the redox conditions shown in **Table 1.**

The HC, CO, and NOₓ T₅₀ light-off temperatures of the aged Comparative Catalyst C, and Catalysts D and E are shown in **Table 3.** The data indicate that, surprisingly, Catalyst E of the present invention also gave improved light-off performance when compared with Catalyst D (Pd/(Si/Al₂O₃+OSC)). The impact of the light-off performance improvement was about 3 °C, 2 °C and 6 °C lower T₅₀ for CO, HC and NOₓ, respectively, for Catalyst E of Pd/(Al₂O₃+Si/OSC) as compared to Catalyst D of Pd/(Si/Al₂O₃+OSC).

**Table 3: SCAT Light-Off Test Results**

| | **T₅₀ (°C)** | | |
|---|---|---|---|
| | CO | HC | NOₓ |
| **Comparative Catalyst C** | 265 | 261 | 268 |
| **Catalyst D** | 267 | 262 | 267 |
| **Catalyst E** | 264 | 260 | 261 |

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A catalyst article for the treatment of exhaust gas from an internal combustion engine, the catalyst article comprising:
a substrate; and
a first washcoat region disposed on the substrate;
wherein the first washcoat region comprises:
a first platinum group metal (PGM) component, the first PGM component comprising Pd and/or Pt;
a first support material comprising a first inorganic oxide and/or a first oxygen storage capacity (OSC) material; and
silica, wherein at least some of the silica is supported on the first support material and wherein the first washcoat region comprises from 0.1 to 10 wt.% of the silica, based on the total weight of the silica and the first support material.

2. The catalyst article of claim 1, wherein the first PGM component comprises Pd.

3. The catalyst article of claim 1 or claim 2, wherein the first inorganic oxide comprises an alumina and/or the first OSC material comprises a ceria-zirconia mixed oxide.

4. The catalyst article of any preceding claim, wherein the first support material comprises the first inorganic oxide and the first OSC material; and
wherein at least some of the silica in the first washcoat region is supported on the first OSC material, preferably at least 75 wt.%, based on the total weight of the silica in the first washcoat region, more preferably at least 90 wt.%, even more preferably at least 95 wt.%, still more preferably at least 99 wt.%, still even more preferably substantially all.

5. The catalyst article of any preceding claim, wherein the first support material comprises the first OSC material and the first washcoat region comprises from 0.5 to 8 wt.% of the silica, based on the total weight of the silica and the first OSC material, preferably wherein the first OSC material comprises from 0.5 to 8 wt.% of the silica supported thereon, based on the total weight of the silica and the first OSC material.

6. The catalyst article of any preceding claim, wherein the first support material comprises the first inorganic oxide and the first OSC material; and
wherein no more than 25 wt.% of the silica in the first washcoat region is supported on the first inorganic oxide, based on the total weight of the silica in the first washcoat region, preferably no more than 10 wt.%, more preferably no more than 5 wt.%, even more preferably no more than 1 wt.%, still even more preferably substantially none.

7. The catalyst article of any preceding claim, wherein the first support material comprises the first inorganic oxide and the first OSC material; and
wherein the ratio by weight of the first inorganic oxide to the first OSC material is from 1:3 to 3:1.

8. The catalyst article of any preceding claim, wherein the first PGM component is supported on the first inorganic oxide and/or the first OSC material.

9. The catalyst article of claim 8, wherein the first PGM component is supported on the first OSC material at a loading of from 0.1 to 5 wt.%, based on the total weight of the first OSC material, preferably wherein the first PGM component comprises Pd.

10. The catalyst article of any preceding claim, wherein the first inorganic oxide comprises an alumina and the alumina preferably comprises one or more of alpha alumina, gamma alumina and theta alumina, preferably wherein the alumina comprises gamma alumina.

11. The catalyst article of claim 10, wherein the alumina is doped with a dopant, preferably wherein the dopant comprises lanthanum.

12. The catalyst article of any preceding claim, wherein the first OSC material comprises a ceria-zirconia mixed oxide and the first OSC material comprises a doped ceria-zirconia mixed oxide, preferably wherein the ceria-zirconia mixed oxide is doped with one or more of Nd, La, Y and Pr.

13. The catalyst article of any preceding claim, wherein when a cross section of the first washcoat region of the catalyst article is subjected to area analysis by FE-EPMA under conditions of pixel (section) size of 0.34 µm × 0.34 µm and number of measured pixels (sections) of 256 × 256, a characteristic X-ray intensity (α: cps) of the silicon (Si) and a characteristic X-ray intensity (β: cps) of the PGM are measured for each pixel, and the Pearson correlation coefficient calculated using the resulting α and β in each pixel is designated as R_{Si/PGM}, then the value of R_{Si/PGM} is at least 0.50, preferably at least 0.60.

14. The catalyst article of any preceding claim, wherein the catalyst article further comprises a second washcoat region disposed on the substrate, the second washcoat region comprising a second PGM component comprising Rh, preferably wherein the first washcoat region at least partially overlays the second washcoat region.

15. A method of treating an exhaust gas from an internal combustion engine, preferably from a gasoline engine, the method comprising contacting the exhaust gas with the catalyst article of any of claims 1 to 14.
